# EUROPEAN PATENT SPECIFICATION

(11) **EP 0 276 473 B1**
(45) Date of publication and mention of the grant of the patent: **11.08.1993**
(21) Application number: 87119122.7
(22) Date of filing: 23.12.1987
(51) Int. Cl.: B60Q 1/38, B60Q 1/46

(54) **Device for handling and controlling the direction and hazard light signals of a motor vehicle**
Gerät zur Handhabung und Steuerung der Richtungs- und Warnblinklichtsignale eines Motorfahrzeuges
Dispositif de manipulation et de commande de feux de signalisation et de détresse

(30) Priority: 30.12.1986 IT 6798486
(43) Date of publication of application: 03.08.1988
(73) Proprietor: FIAT AUTO S.p.A., 10135 Torino (IT)
(72) Inventor: Cavalla, Giancarlo, I-10100 Torino (IT); Ghibaudo, Matteo, I-10100 Torino (IT)
(74) Representative: Prato, Roberto

(56) References cited:
- DE-A- 2 163 009
- FR-A- 2 294 614
- FR-A- 2 318 052
- GB-A- 1 170 925
- US-A- 2 958 071
- US-A- 3 299 402

## Description

This invention relates to a device for handling and controlling the light signals emitted by the direction and hazard indicators of a motor vehicle.

Currently known devices for handling and controlling the direction and hazard light signals of a motor vehicle generally use flashers of the hot-wire (currently being superseded) or electronic type which incorporate in one and the same unit both the electronic control system and the power actuator. Both the aforesaid types of device have drawbacks deriving from the fact that the controls operated by the user handle the entire power required by the indicator lamps (with the consequent need to provide adequate electric contacts) , that the switch acts on the cable connected to the positive pole of the supply voltage (with the consequent danger of short-circuiting to earth), and that a large number of cables and contacts are required for the hazard indication.

In particular, for controlling the hazard lights, a complex 7-output switch is currently employed for enabling control of the lights even with the ignition key removed. Consequently, two fuses are required; one each for supplying the lights as direction indicators and as hazard lights. It is also known, from the document FR-A-2 294 614, a device for handling and controlling the direction and hazard signals, wherein the left and right indicators are controlled by two corresponding relays, which are directly connected with the direction and hazard operating means and are controlled by an electronic unit comprising an intermittent signal generator. However, these relays are not involved in feeding any activation signal to the electronic circuit.

The object of the present invention is to provide an electronic device for handling the direction and hazard indicator light signals of a motor vehicle which obviates the aforesaid drawbacks of known devices.

Said object is attained according to the present invention by a device for handling and controlling the light signals emitted by the direction and hazard indicators of a motor vehicle, which comprises an electronic unit for generating activation signals for said indicators and any additional indicators; and first and second electromagnetic actuators, each of which is controlled by said electronic unit and is arranged for installation in series with a respective branch, i.e. left hand and right hand, carrying said direction and hazard indicators; said electronic unit comprising an intermittent signal generator circuit connected with the energisation coils of said actuators; a direction operating means and a hazard operating means being connected in parallel to one end of each said energisation coils, so that upon operation of either the direction operating means or the hazard operating means an activation signal is fed to the generator circuit and one or both coils are energised and controlled by the intermittent signal; and is characterised in that diode means are provided between said hazard operating means and said energisation coils, and that said electronic circuit includes a transistor controlled by said intermittent signal, and a resistor connected between a single activation input of said generator circuit and the output of said transistor, the other end of each of said energisation coils being also connected to the output of said transistor, whereby said resistor feeds said generator circuit with the activation signal, and said transistor energises one or both said coils.

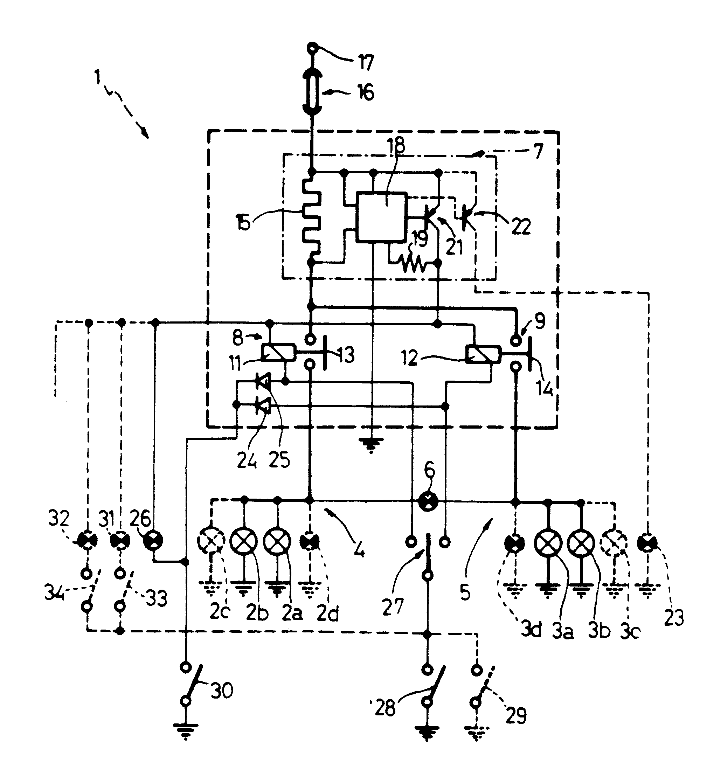

The present invention will be more apparent from the description of a preferred embodiment thereof given hereinafter by way of non-limiting example with reference to the accompanying drawing, which represents a partly schematic illustration of a device according to the present invention. In this diagram, the reference numeral 1 indicates overall a device for handling and controlling the light signals emitted by direction and hazard indicators 2a, 2b, 2c and 3a, 3b, 3c pertaining respectively to a first branch 4 and to a second branch 5, conveniently located for example on the left hand side and the right hand side of a motor vehicle, not shown. More specifically, the indicators 2a, 3a are those installed at the front, the indicators 2b, 3b are those installed at the rear, and the indicators 2c, 3c are those installed at the rear on a hypothetical trailer towed by the said vehicle.

The device 1 comprises an electronic control unit 7 for generating activation signals for the aforesaid indicators, and a pair of actuators 8, 9 respectively, conveniently consisting of electromagnetic switches, each of which comprises a coil 11, 12 controlled by the unit 7, and a respective electrical contact 13, 14 of normally open type connected in series with the said respective branch 4, 5.

The unit 7 comprises substantially a precision resistor 15 having a first terminal connected to the junction point between the electrical contacts 13 and 14, and its opposite terminal connected by way of an extractable fuse 16 to a terminal 17 to which, when in use, the positive pole of the supply voltage (for example the battery) is connected. The unit 7 also comprises a conventional circuit 18 having two signal inputs connected in parallel with the resistor 15, supply inputs connected to the terminal 17 by way of the fuse 16, and to earth respectively, an activation input connected to a first terminal of a resistor 19, and a pair of outputs each of which is connected to the base of a respective transistor 21, 22. As stated, the circuit 18 is of conventional type, and when in use is able to recognise the voltage which arises across the resistor 15 by the effect of the passage of current through said direction indicators, and to generate a consequen intermittent signal for controlling the transistor 21, or a continuous signal for controlling the transistor 22, as described hereinafter. The transistors 21, 22 are of PNP type and have their emitter connected to the positive pole of the supply voltage by way of the fuse 16, and their collector connected respectively to the resistor 19, to a terminal of the coils 11, 12, to a warning lamp 23 and to other warning lamps, as described hereinafter.

Each coil 11, 12 is connected both to the anode of a corresponding diode 25, 24, and to a switching contact of a two-way switch 27 having its common contact connected to earth by way of a switch 28 operated by the ignition key and connected in parallel with a switch 29 (not essential, and can either be provided additionally or alternatively). The two-way switch 27 is that used to operate the direction indicators 2a, 2b, 2c or 3a, 3b, 3c, whereas the switch 29 consists for example of a press switch operated by the driver and conveniently located on the vehicle driving seat. In addition, two respective warning lamps 2d, 3d are connected in parallel with the direction indicators 2a, 2b, 2c and 3a, 3b, 3c respectively, and are conveniently located on the vehicle instrument panel (in a first circuit version). As an alternative to the warning lamps 2d, 3d a warning lamp 6 could be provided, connected across the branches 4 and 5 at the junction modes between these latter and the respective electrical contacts 13, 14.

The cathode of each diode 25, 24 is connected to the junction between a warning lamp 26 and a first terminal of a switch 30, the second terminal of which is connected to earth, the warning lamp 26 having a terminal connected to the collector of the transistor 21.

Finally, the reference numerals 31, 32 indicate warning lamps connected in series with respective switches 33, 34 defining two parallel branches, the opposing terminals of which are connected respectively to the junction between the switch 28 and the two-way switch 27 on one side, and to the collector of the transistor 21 on the other side (as heretofore stated). The operation of the device 1 is described hereinafter, assuming initially that the vehicle is not provided with a trailer (absence of the indicators 2c, 3c, and non-activation of the transistor 22 or warning lamp 23).

Assuming that either the switch 28 or the switch 29 or both are closed, closing the two-way switch 27 in one of its two directions causes an activation signal to be fed to the circuit 18 by way of the coil of one of the actuators 8, 9 and the resistor 19. The circuit 18 then operates the transistor 21 intermittently at the frequency determined by the voltage which arises across the precision resistor 15 when the electrical contact 13 or 14 of the actuator 8 or 9 closes. On being activated, the transistor 21 activates the actuator 8 or 9, and thus, by way of the relative electrical contacts 13, 14, also causes intermittent lighting of the direction indicators 2a, 2b or 3a, 3b, and lighting of the warning lamp 2d or 3d, or, if these latter are absent, of the warning lamp 6. In practice, the warning lamp 6 is not provided if the warning lamps 2d and 3d are present. However, it lights even if these latter are present.

If one of the two indicators 2a, 2b or 3a, 3b does not light, the voltage across the resistor 15 is halved. This change is sensed by the circuit 18, which alters the operating frequency of the transistor 21, with consequent alteration of the flashing frequency of the only efficient indicator and of the relative warning lamp so as to indicate this defect to the driver.

Flashing obviously ceases when the two-way switch 27 is returned to its rest position shown on the figure, or if both the switches 28 and 29 are opened.

The "hazard" warning is obtained by simply closing the switch 30, and is effective even if the switches 28 and 29 are open. In this respect, closing the switch 30 activates the circuit 18 by way of the diodes 25, 24, the coils 11, 12 of the actuators 8, 9, and the resistor 19. By way of the transistor 21, the circuit 18 feeds both coils 11, 12, with consequent intermittent lighting of all the indicators located in the branches 4 and 5. The warning lamp 26 is also lit intermittently to indicate this particular operating condition to the driver. If provided, the warning lamp 6 does not however light, as its opposite terminals are at equal potential.

During hazard operation the device 1 provides the warning relative to the inoperative direction indicators only when just one of them remains operational and the other three have burnt out. Again in this case, the warning is provided by a variation in the flashing frequency of the warning lamps 2d, 3d, 26.

If the vehicle is provided with a trailer, the operation of the device 1 is as follows. Firstly, the circuit 18 is provided with a double intervention threshold for fault indication. Compared with the case of the vehicle without trailer described heretofore, when operating under normal direction and hazard indication conditions, there is the additional lighting of the warning lamp 23 synchronously with the main indicators. The first threshold of the circuit 18 intervenes to indicate interruption of one of the three main indicators if indicating direction, or the interruption of four main lamps out of six if indicating a hazard. Specifically, this first threshold results in deactivation of the transistor 22, and thus extinguishing of the warning lamp 23 as already stated.

The second intervention threshold is established in the circuit 18 to sense when two main indicators out of three have burnt out if indicating direction, or when five main indicators out of six have burnt out if indicating a hazard.

The device 1 is also able to intermittently operate the warning lamps 31, 32 when the respective switches 33, 34 are closed, to indicate for example the engagement of the handbrake, operation of the starter etc.

The advantages of the device according to the present invention are apparent from an examination of its characteristics. The use of two actuators allows low-power controls and a simplified circuit to be used, and these actuators can be of reduced capacity as they have to withstand the current of only one branch of the intermittent indicators. It also provides for simplified wiring (only one fuse for both direction and hazard lights, even in cases where the direction lights are only controllable with the ignition key inserted); reduced control cost (low-power one-way switch 30 for controlling the hazard lights, and low-power switch 28 which is also relieved of the lamp current and called upon to handle the control signal current); and improved vehicle safety by earthing the controls and thus preventing short-circuiting. Should switch 28, controlled by the ignition key, be connected to the positive supply voltage pole, it may be replaced by switch 29, which may, for example, constitute the normally-open contact of a relay activated by the said switch 28.

The use of two actuators means that their life is at least twice that of known systems (in this respect they operate for only half the time), and if the actuator develops a fault there is the advantage of still having one side of the vehicle operational.

Moreover, repairing the fault does not require replacement of the electronic control device, provided that this does not form a combined unit with the said actuators.

Further advantages obtainable with the device according to the invention are as follows:
a) additional warning lamps can be operated intermittently without using the actuators;
b) the voltage drop between the battery and lamps is reduced because of a smaller number of junctions;
c) the device can also be mounted is systems in which the positive role of the battery is connected to earth.

Finally, modifications can be made to the device 1 heretofore described, but without leaving the scope of the present invention.

## Claims

1. A device for handling and controlling the light signals emitted by the direction and hazard indicators (2a, 2b, 2c; 3a, 3b, 3c) of a motor vehicle, comprising an electronic unit (7) for generating activation signals for said indicators (2a, 2b, 2c; 3a, 3b, 3c) and any additional indicators (31, 32); and first and second electromagnetic actuators (8, 9), each of which is controlled by said electronic unit (7) and is arranged for installation in series with a respective branch (4, 5), i.e. left hand and right hand, carrying said direction and hazard indicators (2a, 2b, 2c; 3a, 3b, 3c); said electronic unit (7) comprising an intermittent signal generator circuit (18) connected with the energisation coils (11, 12) of said actuators (8, 9); a direction operating means (27) and a hazard operating means (30) being connected in parallel to one end of each said energisation coils (11, 12), so that upon operation of either the direction operating means (27) or the hazard operating means (30) an activation signal is fed to the generator circuit (18) and one or both coils (11, 12) are energised and controlled by the intermittent signal; characterised in that diode means (24, 25) are provided between said hazard operating means (30) and said energisation coils (11, 12), and that said electronic circuit (7) includes a transistor (21) controlled by said intermittent signal, and a resistor (19) connected between a single activation input of said generator circuit (18) and the output of said transistor (21), the other end of each of said energisation coils (11, 12) being also connected to the output of said transistor (21), whereby said resistor (19) feeds said generator circuit (18) with the activation signal, and said transistor (21) energises one or both said coils (11, 12.

2. A device as claimed in claim 1, characterised in that said actuators (8, 9) include corresponding contact means (13, 14) power supplied through a common power resistor (15), said generator circuit (18) having two signal inputs connected in parallel with said power resistor (15) and being adapted to sense a voltage change across said power resistor (15) to alter the frequency of said intermittent signal.

3. A device as claimed in claim 1 or 2, characterised in that it comprises warning lamp means (6; 2d, 3d) connected with said indicators (2a, 2b, 2c; 3a, 3b, 3c) and operable in conjunction therewith by means of said actuators (8, 9).

4. A device as claimed in any one of the foregoing claims, characterised in that it comprises an additional switch (29) for enabling said indicators (2a, 2b, 2c; 3a, 3b, 3c) in addition to or by way of alternative to a switch (28) controlled by the ignition key of said motor vehicle.

5. A device as claimed in claim 4, characterised in that, said additional switch (29) constitutes a normally open contact of a relay activated by said switch (28) controlled by said ignition key, should this latter switch (28) be controlled to the positive supply voltage pole.

## Patentansprüche

1. Vorrichtung zum Betätigen und Steuern der Lichtsignale, die durch die Fahrtrichtungs- und Warnblinkanzeiger (2a, 2b, 2c; 3a, 3b, 3c) eines Kraftfahrzeugs ausgesandt werden, aufweisend eine elektronische Baueinheit (7) zum Erzeugen von Aktivierungssignalen für die Anzeiger (2a, 2b, 2c; 3a, 3b, 3c) und jegliche zusätzlichen Anzeiger (31, 32); und erste und zweite elektromagnetische Aktuatoren (8, 9), von denen jeder durch die elektronische Baueinheit (7) gesteuert wird und zum Schalten in Reihe mit jeweiligen rechten und linken Zweigleitungen (4, 5), an denen die Fahrtrichtungs- und Warnblinkanzeiger (2a, 2b, 2c; 3a, 3b, 3c) angeordnet ist; wobei die elektronische Baueinheit (7) eine intermittierende Signalerzeugungs-Schaltung (18), die mit den Erregerspulen (11, 12) der Aktuatoren (8, 9) verbunden ist, Mittel (27) zum Betätigen der Fahrtrichtungsanzeige und Mittel (30) zum Betätigen der Warnblinkanzeige, die parallel mit einem Ende einer jeden Erregerspule (11, 12) verbunden sind, aufweist, so daß bei Betätigung entweder der Fahrtrichtungs-Betätigungsmittel (27) oder der Mittel (30) zum Betätigen der Warnblinkanzeige ein Aktivierungssignal an die Generatorschaltung (18) übermittelt wird und eine oder beide Spulen (11, 12) durch das intermittierende Signal erregt und gesteuert werden; dadurch gekennzeichnet, daß Diodenmittel (24, 25) zwischen den Mitteln (30) zum Betätigen der Warnblinkanlage und den Erregerspulen (11, 12) vorgesehen sind, und daß die elektronische Schaltung (7) einen Transistor (21), der durch das intermittierende Signal gesteuert wird, und einen Widerstand (19) aufweist, der zwischen einem einzelnen Aktivierungseingang der Generatorschaltung (18) und dem Ausgang des Transistors (21) verschaltet ist, wobei das andere Ende einer jeden Erregerspule (11, 12) ebenfalls mit dem Ausgang des Transistors (21) verbunden ist, wodurch der Widerstand (19) das Aktivierungssignal der Generatorschaltung (18) übermittelt, und der Transistor (21) eine oder beide Spulen (11, 12) erregt.

2. Vorrichtung nach Anspruch 1, dadurch gekennzeichnet, daß die Aktuatoren (8, 9) korrespondierende Kontaktmittel (13, 14) aufweisen, die durch einen gemeinsamen Hochleistungswiderstand (15) mit Energie versorgt werden, wobei die Generatorschaltung (18) zwei Signaleingänge hat, die parallel mit dem Hochleistungswiderstand (15) verbunden sind und die so ausgelegt ist, daß sie einen Spannungswechsel an dem Hochleistungswiderstand (15) erkennt, um die Frequenz des intermittierenden Signals zu ändern.

3. Vorrichtung nach Anspruch 1 oder 2, dadurch gekennzeichnet, daß Warnleuchten-Mittel (6, 2d, 3d) vorhanden sind, die mit den Anzeigern (2a, 2b, 2c; 3a, 3b, 3c) verbunden sind und die in Verbindung damit mittels der Aktuatoren (8, 9) betätigbar sind.

4. Vorrichtung nach irgendeinem der vorangehenden Ansprüche, dadurch gekennzeichnet, daß sie zusätzlich oder als Alternative zu einem Schalter (28), der durch den Zündschlüssel des Kraftfahrzeugs gesteuert wird, einen zusätzlichen Schalter (29) zum Betätigen der Anzeiger (2a, 2b, 2c; 3a, 3b, 3c) aufweist.

5. Vorrichtung nach Anspruch 4, dadurch gekennzeichnet, daß der zusätzliche Schalter (29) ein im Normalzustand offener Kontakt eines Relais ist, das durch den Schalter (28), der durch den Zündschlüssel gesteuert wird, aktiviert wird, falls der letztere Schalter (28) zum positiven Pol der Bordnetzspannung gesteuert wird.

## Revendications

1. Dispositif de manipulation et de commande des signaux lumineux émis par les indicateurs de direction et de détresse (2a,2b,2c;3a,3b,3c) d'un véhicule à moteur, comprenant une unité électronique (7) pour engendrer des signaux d'activation desdits indicateurs (2a,2b,2c;3a,3b, 3c) et d'indicateurs additionnels éventuels (31,32) ; et un premier et un deuxième actionneurs électromagnétiques (8,9) dont chacun est commandé par ladite unité électronique (7) et est agencé pour une installation en série avec une branche respective (4,5), par exemple du côté gauche et du côté droit, portant lesdits indicateurs de direction et de détresse (2a,2b,2c;3a,3b,3c) ; ladite unité électronique (7) comprenant un circuit générateur de signal intermittent (18) connecté aux bobines d'excitation (11,12) desdits actionneurs (8,9) ; un organe d'activation de direction (27) et un organe d'activation de détresse (30) étant connectés en parallèle à une extrémité de chacune desdites bobines d'excitation (11,12) de sorte que, lors de la manoeuvre de l'organe d'activation de direction (27) ou de l'organe d'activation de détresse (30), un signal d'activation est envoyé au circuit générateur (18) et une bobine ou les deux (11,12) sont excitées et commandées par le signal intermittent ; caractérisé en ce que des moyens à diodes (24,25) sont prévus entre ledit organe d'activation de détresse (30) et les dites bobines d'excitation (11,12), et en ce que ledit circuit électronique (7) comprend un transistor (21) commandé par ledit signal intermittent et une résistance (19) connectée entre une entrée d'activation unique dudit circuit générateur (18) et la sortie dudit transistor (21), l'autre extrémité de chacune desdites bobines d'excitation (11,12) étant également connectée à la sortie dudit transistor (21), de sorte que ladite résistance (19) fournit le signal d'activation audit circuit générateur (18), et ledit transistor (21) excite une desdites bobines (11,12) ou les deux.

2. Dispositif suivant la revendication 1, caractérisé en ce que lesdits actionneurs (8,9) comportent des contacts correspondants (13,14) auxquels la puissance est amenée par l'intermédiaire d'une résistance de puissance commune (15), ledit circuit générateur (18) ayant deux entrées de signal connectées en parallèle avec ladite résistance de puissance (15) et étant prévu pour détecter une variation de tension aux bornes de ladite résistance de puissance (15) afin de modifier la fréquence dudit signal intermittent.

3. Dispositif suivant la revendication 1 ou 2, caractérisé en ce qu'il comprend des lampes de signalisation (6;2d,3d) connectées avec lesdits indicateurs (2a,2b,2c;3a,3b,3c) et fonctionnant en conjonction avec ces derniers sous la commande desdits actionneurs (8,9).

4. Dispositif suivant l'une quelconque des revendications précédentes, caractérisé en ce qu'il comprend un interrupteur additionnel (29) pour activer les dits indicateurs (2a,2b,2c;3a,3b,3c) en supplément ou en remplacement d'un interrupteur (28) commandé par la clé de contact du moteur dudit véhicule.

5. Dispositif suivant la revendication 4, caractérisé en ce que ledit interrupteur additionnel (29) constitue un contact normalement ouvert d'un relais excité par ledit interrupteur (28) commandé par ladite clé de contact, si ce dernier interrupteur (28) doit être connecté au pôle positif de la source de tension.
